# EUROPÄISCHE PATENTSCHRIFT

(11) **EP 1 111 265 B1**
(45) Veröffentlichungstag und Bekanntmachung des Hinweises auf die Patenterteilung: **04.10.2006**
(21) Anmeldenummer: 00123847.6
(22) Anmeldetag: 02.11.2000
(51) Int. Cl.: F16D 65/12

(54) **Kombinierte Scheiben- und Trommelbremse mit einer innenbelüfteten Bremsscheibe**
Combined disc and drum brake with an internally ventilated brake disc
Frein à disque et à tambour combiné, avec une disque à ventilation interne

(30) Priorität: 24.12.1999 DE 19963030
(43) Veröffentlichungstag der Anmeldung: 27.06.2001
(73) Patentinhaber: Dr.Ing. h.c.F. Porsche Aktiengesellschaft, 70435 Stuttgart (DE)
(72) Erfinder: Aydt, Günter, 71522 Backnang (DE)

(56) Entgegenhaltungen:
- DE-A- 3 824 917
- US-A- 4 313 528
- US-A- 5 180 037
- PATENT ABSTRACTS OF JAPAN vol. 018, no. 644 (M-1718), 7. Dezember 1994 (1994-12-07) & JP 06 249273 A (AISIN TAKAOKA LTD), 6. September 1994 (1994-09-06)

## Beschreibung

Die Erfindung bezieht sich auf eine kombinierte Scheiben- und Trommelbremse mit einer innenbelüfteten Bremsscheibe und mit einem von einem Abschirmblech abgestellten, umlaufenden Wasserführungsblech, wie z.B aus JP-A-6 249 273 bekannt.

Unter der im DE-C-199 08 914, veröffentlicht am 15.02.2001 behandelten Ausführung ist bereits eine kombinierte Scheiben - und Trommelbremse mit einer innenbelüfteten Bremsscheibe beschrieben. Diese weist zur Vermeidung eines Eindringens von Wasser auf die Lauffläche der Innenbackenbremse in einem Reibring der Bremsscheibe einen Ringkanal mit zwei gegenüberliegenden Ringnuten auf. In den Ringkanal ragt ein schräg gestelltes Wasserführungsblech einer äußeren Abschirmung hinein, welches einerseits in einer Wassereintrittsposition das Spritzwasser sammelt und in einer Wasseraustrittsposition das aufgefangene Spritzwasser nach außen abgibt.

Aufgabe der Erfindung ist es, bei einer innenbelüfteten Bremsscheibe mit einer in der Bremstrommel angeordneten Innenbackenbremse ein Eindringen von Spritzwasser auf die Lauffläche der Innenbackenbremse unbedingt zu vermeiden und eine gezielte Wasserabführung mittels einer einfach herzustellenden Ringnut zu schaffen, die einen umlaufenden Kanal in der Bremsscheibe bildet.

Diese Aufgabe wird erfindungsgemäß durch die Merkmale des Anspruchs 1 gelöst.
Weitere vorteilhafte Merkmale beinhalten die Unteransprüche.

Die mit der Erfindung hauptsächlich erzielten Vorteile bestehen darin, daß die Ringnut in einem Reibring der Bremsscheibe mit jeweils einer Wasserablauffläche und einer Wasserauffangfläche einfach herstellbar ist. Diese die Ringnut seitlich bzw. oben und unten begrenzenden Flächen sind verschieden flächig ausgeführt und zur äußeren Nutöffnung hin derart schräg verlaufend angeordnet, daß sich eine verengte äußere Nutöffnung ergibt.

Damit das in die Bremsscheibe eintretende Spritzwasser bzw. Wasser ohne ausgeprägte Ringkanäle, wie nach der Patentschritt DE-C-199 08 914, in den seitlichen Wänden der Ringnut trotzdem gesammelt und schnell nach außen abgeführt werden kann, ist die eine obere Seitenfläche der Ringnut - in der Wassereintrittsposition gesehen - leicht bogenförmig und die untere gegenüberliegende Seitenfläche mit einer Vertiefung gegenüber der anschließenden Kanalwand des Luftführungskanals versehen.

Insgesamt liegt die Vertiefung in der Seitenfläche unterhalb des Niveaus der anschließenden Kanalwand des Luftführungskanals und ist zu dieser schräg geneigt angeordnet und weist einen ausgerundeten Endbereich auf.

Ein Ausführungsbeispiel der Erfindung ist in den Zeichnungen dargestellt und wird im folgenden näher beschrieben.

Es zeigen:
- Fig. 1: Einen Querschnitt durch eine Bremsscheibe nach der Patentschritt DE-C-199 08 914 mit einer zwei Ringkanäle aufweisenden Ringnut in einer Wassereintrittsposition,
- Fig. 2: eine vergrößerte Darstellung einer erfindungsgemäßen Ringnut in einer Wassereintrittsposition und
- Fig. 3: eine vergrößerte Darstellung der erfindungsgemäßen Ringnut in einer Wasseraustrittsposition

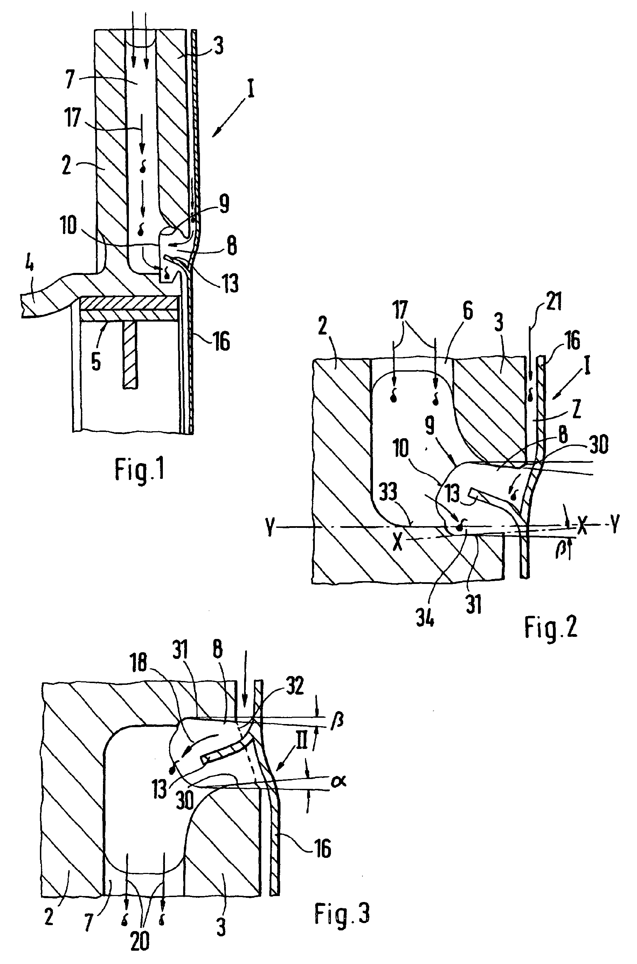

Eine innenbelüftete Bremsscheibe 1 gemäß der Figuren 1 bis 3 umfaßt im wesentlichen zwei Reibringe 2, 3, die mit einer Bremstrommel 4 verbunden sind. In dieser ist eine Innenbackenbremse 5 angeordnet. Diese beiden Reibringe 2, 3 weisen radiale Querrippen 6 über den Umfang auf, welche zwischen den Reibringen 2, 3 Luftführungskanäle 7 bilden.

Der innenliegende eine Reibring 3 der Bremsscheibe 1 ist mit einer Ringnut 8 versehen, die koaxial zur Bremstrommel angeordnet ist. Diese Ringnut 8 ist am unteren Ende der Luftführungskanäle 7 vorgesehen und zu diesen über im Grund 9 vorgesehene Öffnungen 10 durchgängig verbunden.

Über ein beabstandet zum inneren Reibring 3 angeordnetes Abschirmblech 16 ist die Bremsscheibe 1 geschützt. An diesem ist ein Wasserführungsblech 13, ein sogenannter Kragen vorgesehen, der in die Ringnut 8 hineinragt.

Die Ringnut 8 weist seitlich eine begrenzende Wasserablauffläche 30 und gegenüberliegend eine sogenannte Wasserauffangfläche 31 auf. Diese beiden Flächen 30, 31 sind schräg zur äußeren Nutöffnung 32 verlaufend angeordnet. Wie in den Figuren 2 und 3 näher zu erkennen ist, steht die Fläche 30 unter einem Winkel α und die weitere Fläche 31 unter einem Winkel β.

Die Wasserablauffläche 30 ist leicht bogenförmig nach außen zur Nutöffnung 32 hin gewölbt, sie kann aber auch als plane Fläche ausgeführt sein.

Die Wasserauffangfläche 31 ist mit einer Vertiefung 34 zur Kanalwand 33 des Luftführungskanals 7 versehen und liegt unterhalb der Ebene Y-Y der Wand 33 in einer Schrägebene X-X. Durch die Schrägstellung unter dem Winkel β (Fig. 2) wird in der Wassereintrittsposition I einem Wasserabfluß nach außen in der Position I vorgebeugt.

Das Wasserführungsblech 13 ist schräg unter einem Winkel angestellt und ersteckt sich bis nahe zum Grund 9 bzw. zu den Öffnungen 10 zwischen die Querrippen 6 der Bremsscheibe 1. In Figur 2 ist eine Wassereintrittsposition der erfindungsgemäßen Ringnut 8 dargestellt, das heißt der Wassereintritt erfolgt etwa in vertikaler Position der Bremsscheibe 1, wobei auch in weiteren Positionen Wasser bzw . Wassertropfen in die Luftführungskanäle 7 gelangen können. Das Wasser fließt in Pfeilrichtung 17 durch die Öffnungen 10 in die Ringnut 8 und von hier aus in Pfeilrichtung 18 (Figur 3) durch die Öffnung 10 in die Luftführungskanäle 7 und weiter in Pfeilrichtung 20 nach außen.

Im Bereich Z zwischen dem Abschirmblech 16 und dem inneren Reibring 3 eintretendes Wasser bzw. Wassertropfen fließen in Pfeilrichtung 21 in die Ringnut 8 und direkt in Pfeilrichtung 18 durch die Öffnungen 10 in die Luftführungskanäle 7 bzw. duch den Zwischenraum Z nach außen.

## Patentansprüche

1. Kombinierte Scheiben- und Trommelbremse mit einer innenbelüfteten Bremsscheibe, mit zwei Reibringen (2, 3), mit einem von einem Abschirmblech (16) abgestellten, umlaufenden Wasserführungsblech (13) und einer in einer Bremstrommel angeordneten Innenbackenbremse, wobei im inneren Reibring (3) eine Ringnut (8) vorgesehen ist, die in ihrem Grund (9) Durchtrittsöffnungen zu Luftführungskanälen zwischen den Reibringen aufweist, und eine dem Grund gegenüberliegende verengte Nutöffnung (32) vorgesehen ist, an die sich gegenüberliegende Ringflächen innerhalb der Ringnut anschließen, und das abgestellte Wasserführungsblech (13) in die Ringnut und zwischen die Ringflächen ragt, **dadurch gekennzeichnet, daß** das Wasserführungsblech (13) unter einem Winkel zur Ringfläche derart angestellt ist, daß in einer etwa vertikalen Wassereintrittsposition das Führungsblech unter einem spitzen Winkel zum Ringnutgrund angestellt ist und gleichzeitig in einer etwa vertikalen Wasseraustrittsposition des Führungsbleches eine Ablaufschräge bildet, und daß die Ringflächen (30, 31) die Ringnut (8) jeweils seitlich begrenzen und eine Wasserablauf- bzw. eine Wasserfangfläche bilden, die beide zum Abschirmblech (16) hin unter einem Winkel (α, β) schräg verlaufend und die äußere Ringnutöffnung (32) gemeinsam verengend angeordnet sind.

2. Kombinierte Scheiben- und Trommelbremse nach Anspruch 1, **dadurch gekennzeichnet, daß** in der Wassereintrittsposition (I) die eine oben liegende Ringfläche (30) in etwa bogenförmig zur äußeren Ringnutöffnung (32) verläuft, wobei die unten liegende Ringfläche (31) eine flächige Vertiefung (34) gegenüber der Kanalwand (33) des Luftführungskanals (7) aufweist.

3. Kombinierte Scheiben- und Trommelbremse nach den Ansprüchen 1 oder 2, **dadurch gekennzeichnet, daß** die flächige Vertiefung (34) in einer Schrägebene (X-X) unterhalb einer Ebene (Y-Y) der Kanalwand (33) verläuft und zu dieser mit einer Ausrundung endet.

## Claims

1. A combined disc brake and drum brake with an internally ventilated brake disc, with two friction rings (2, 3), with a continuous water-guiding plate (13) projecting from a screen plate (16) and an internally acting shoe brake arranged in a brake drum, wherein an annular groove (8), the bottom (9) of which has through-openings to air-guiding ducts between the friction rings, is provided in the inner friction ring (3), and a constricted groove opening (32) is provided, which is opposite the bottom (9) and which is adjoined by mutually opposed annular faces inside the annular groove, and the projecting water-guiding plate (13) projects into the annular groove and between the annular faces, **characterized in that** the water-guiding plate (13) is set at an angle to the annular face in such a way that the guiding plate is set at an acute angle to the bottom of the annular groove in a substantially vertical water-ingress position and at the same time forms a run-off slope in a substantially vertical water-exit position of the guiding plate, and the annular faces (30, 31) bound the annular groove (8) laterally in each case and form a water run-off or catching face, and both are arranged so as to extend obliquely at an angle (α, β) with respect to the screen plate (16) and so as to constrict the outer groove opening (32) jointly.

2. A combined disc brake and drum brake according to Claim 1, **characterized in that** in the water-ingress position (I) the annular face (30) situated at the top extends in a slightly curved shape towards the outer annular-groove opening (32), wherein the annular face (31) situated at the bottom has a flat depression (34) with respect to the wall (33) of the air-guiding duct (7).

3. A combined disc brake and drum brake according to Claim 1 or 2, **characterized in that** the flat depression (34) extends in an oblique plane (X-X) below a plane (Y-Y) of the duct wall (33) and terminates with a rounded portion with respect to the latter.

## Revendications

1. Frein combiné à disque et à tambour avec un disque de frein à ventilation intérieure, avec deux anneaux de friction (2, 3), avec une tôle de guidage d'eau (13) périphérique, à l'abri d'une tôle de protection (16) et un frein à mâchoire intérieure disposé dans un tambour de frein, dans l'anneau de friction intérieur (3) étant prévue une rainure annulaire (8) qui présente dans son fond (9) des orifices de passage vers des canaux de guidage d'air entre les anneaux de friction, et une ouverture de rainure (32) rétrécie située face au fond étant prévue à laquelle se raccordent des surfaces annulaires opposées à l'intérieur de la rainure annulaire, et la tôle de guidage d'eau (13) décrochée s'étendant dans la rainure annulaire et entre les surfaces annulaires, **caractérisé en ce que** la tôle de guidage d'eau (13) est inclinée par rapport à la surface annulaire suivant un angle tel que dans une position d'entrée d'eau à peu près verticale, la tôle de guidage est inclinée suivant un angle aigu par rapport au fond de la rainure annulaire et forme en même temps une surface oblique d'écoulement dans une position de sortie d'eau à peu près verticale de la tôle de guidage, et **en ce que** les surfaces annulaires (30, 31) délimitent chacune latéralement la rainure annulaire (8) et forment une surface d'écoulement d'eau ou une surface de retenue d'eau qui sont disposées toutes deux de manière à s'étendre obliquement suivant un angle (α, β) par rapport à la tôle de protection (16) et de manière à rétrécir ensemble l'ouverture extérieure (32) de la rainure annulaire.

2. Frein combiné à disque et à tambour selon la revendication 1, **caractérisé en ce que** dans la position d'entrée d'eau (I) une surface annulaire (30) située à la partie supérieure s'étend à peu près en arc vers l'ouverture extérieure (32) de la rainure annulaire, la surface annulaire (31) située à la partie inférieure présentant un renfoncement (34) plat par rapport à la paroi (33) du canal de guidage d'air (7).

3. Frein combiné à disque et à tambour selon les revendications 1 ou 2, **caractérisé en ce que** le renfoncement (34) plat s'étend dans un plan oblique (X-X) au-dessous d'un plan (Y-Y) de la paroi (33) du canal et se termine par rapport à celle-ci avec une partie arrondie.
